# FASCICULE DE BREVET EUROPEEN

(11) **EP 4 048 965 B1**
(45) Date de publication et mention de la délivrance du brevet: **03.12.2025**
(21) Numéro de dépôt: 20785988.5
(22) Date de dépôt: 07.10.2020
(51) Int. Cl.: C21D 1/62, F25D 3/10, F25D 17/06, F25D 23/02, C21D 1/613, C21D 1/767, C21D 9/00

(54) **CELLULE DE TREMPE SOUS GAZ**
GASLÖSCHZELLE
GAS QUENCHING CELL

(30) Priorité: 24.10.2019 FR 1911902
(43) Date de publication de la demande: 31.08.2022
(73) Titulaire: ECM TECHNOLOGIES, 38000 Grenoble (FR)
(72) Inventeur: RAVET, Stephane, 38000 GRENOBLE (FR); TISSOT, Gerard, 38000 GRENOBLE (FR)
(74) Mandataire: Cabinet Beaumont
(86) Numéro de dépôt international: PCT/EP2020/078167
(87) Numéro de publication internationale: WO 2021/078520

(56) Documents cités:
- EP-A1- 0 483 596
- CN-A- 107 988 474
- JP-A- 2009 287 085

## Description

### Domaine technique

La présente description concerne de façon générale les installations de traitement de pièces métalliques ou en verre et, plus particulièrement les cellules de trempe sous gaz.

### Technique antérieure

Les cellules de trempe sous gaz sont particulièrement répandues dans l'industrie pour traiter des pièces métalliques ou en alliage à base de métaux, voire en verre. Ce traitement de pièces à l'état solide est typiquement un traitement thermique de refroidissement rapide (de trempe).

Une cellule de trempe est généralement constituée d'une enceinte hermétique dans laquelle est organisée une circulation de gaz de refroidissement (ou gaz de trempe) de pièces à traiter placées dans l'enceinte. Cette circulation conditionne la qualité du traitement et les performances de l'installation.

Le document JP 2009 287085 décrit un appareil et un procédé de traitement thermique suivant le préambule de la revendication 1.

Le document CN 107 988 474 décrit un four de trempe à gaz à haute pression sous vide avec un canal de diversité.

Le document EP 0 483 596 décrit un four à vide pour traitement thermique de pièces métalliques.

### Résumé de l'invention

Un mode de réalisation pallie tout ou partie des inconvénients des cellules de trempe connues.

Un mode de réalisation prévoit une cellule de trempe à circulation améliorée des gaz de trempe.

L'invention est telle que définie dans les revendications annexées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 est une vue en perspective externe d'un mode de réalisation d'une cellule de trempe ;
la figure 2 représente des vues A et B en coupe, en perspective et partielles d'un mode de réalisation d'une cellule de trempe ;
la figure 3 est une vue en perspective d'un mode de réalisation préféré d'un système à parois mobiles pour cellule de trempe ; et
la figure 4 est une vue en perspective et en coupe d'un mode de réalisation d'un système de parois mobiles et de son mécanisme d'actionnement, intégrés à une cellule de trempe.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les effets, sur des pièces à traiter, de différents gaz de trempe en fonction des débits, volumes, températures et pressions de ces gaz sont connus et ne seront pas détaillés, les modes de réalisation décrits étant compatibles avec les traitements et paramètres (débits, volumes, pressions, températures, etc.) usuels.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures ou à une cellule de trempe dans une position normale d'utilisation.

Sauf précision contraire, les expressions "environ", "approximativement", "sensiblement", et "de l'ordre de" signifient à 10 % près, de préférence à 5 % près.

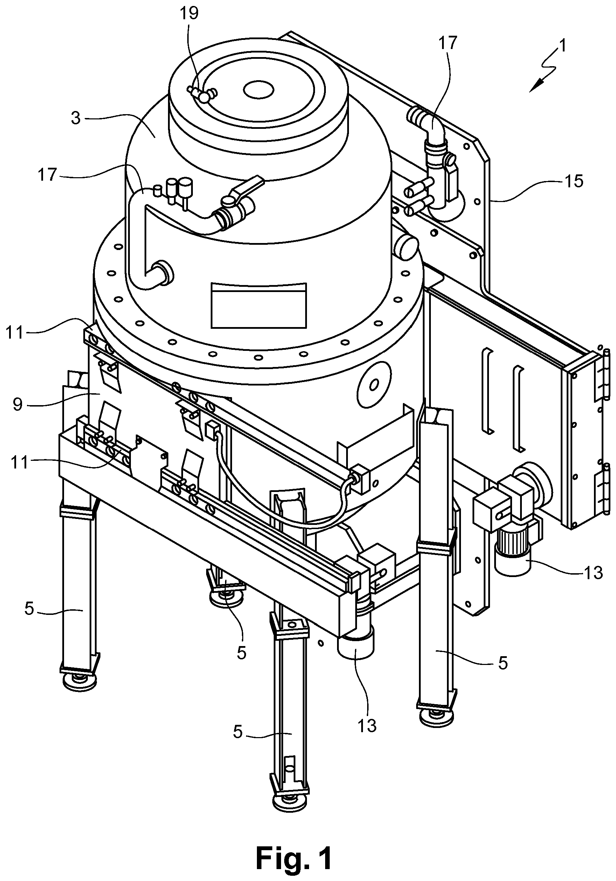

La figure 1 est une vue en perspective d'un mode de réalisation d'une cellule de refroidissement rapide ou cellule de trempe 1.

Une telle cellule 1 fait typiquement partie d'une installation ou ligne de traitement de pièces métalliques, en alliage métallique ou en verre qui comporte d'autres postes de fabrication et de traitement des pièces.

La cellule 1 de trempe sous gaz comprend une enceinte 3 de forme générale cylindrique.
L'enceinte 3 est de direction principale (direction principale de circulation des gaz) verticale ou horizontale.

Dans l'exemple préféré représenté en figure 1, l'enceinte 3 est une enceinte cylindrique d'axe vertical. L'enceinte 3 repose sur des supports 5, ou pieds.

L'enceinte 3 comprend deux ouvertures (non visibles en figure 1) d'accès à un espace de traitement interne à l'enceinte. Les deux ouvertures sont de préférence en vis à vis. Ces deux ouvertures servent, notamment dans une installation en ligne, respectivement à l'introduction ou chargement de pièces à traiter et au déchargement des pièces traitées, c'est-à-dire au transfert de charges. A titre de variante, selon l'agencement de la cellule dans l'installation de traitement, l'enceinte comporte une seule ouverture servant au chargement et au déchargement des pièces. Chaque ouverture est associée à une porte 9, extérieure à l'enceinte 3. La ou les portes 9 sont, par exemple des portes montées à coulissement entre des rails de guidage 11, par exemple horizontaux, et sont mues par des moteurs 13. La ou les portes 9 assurent une fermeture étanche de la cellule 1, l'intérieur de l'enceinte 3 de la cellule de trempe 1 étant, en fonctionnement, à des pressions généralement comprises entre 1 et 20 bars.

Dans l'exemple représenté, une des ouvertures est associée à des éléments 15 de raccordement de la cellule 1 à un module, non représenté, du reste de l'installation dont fait partie la cellule 1. Il s'agit par exemple d'une cellule de chauffe ou d'une chambre de transfert. Cette connexion permet de faciliter le transfert automatique, sans remise à l'air, de pièces à traiter entre ce module de traitement et la cellule de trempe. Le cas échéant les deux ouvertures sont chacune associée à un module externe à la cellule.

La cellule 1 de trempe sous gaz comprend en outre un échangeur (non visible en figure 1), interne à l'enceinte, pour refroidir le ou les gaz pendant la trempe. L'échangeur est alimenté en fluide de refroidissement, par exemple de l'eau, par des conduites 17.

Les gaz sont, dans l'exemple de la cellule de la figure 1, introduits par un conduit 19 situé en partie supérieure de l'enceinte 3. A titre d'exemple, les gaz utilisés pour la trempe dans la cellule 1 sont de l'azote, de l'hélium et/ou de l'argon.

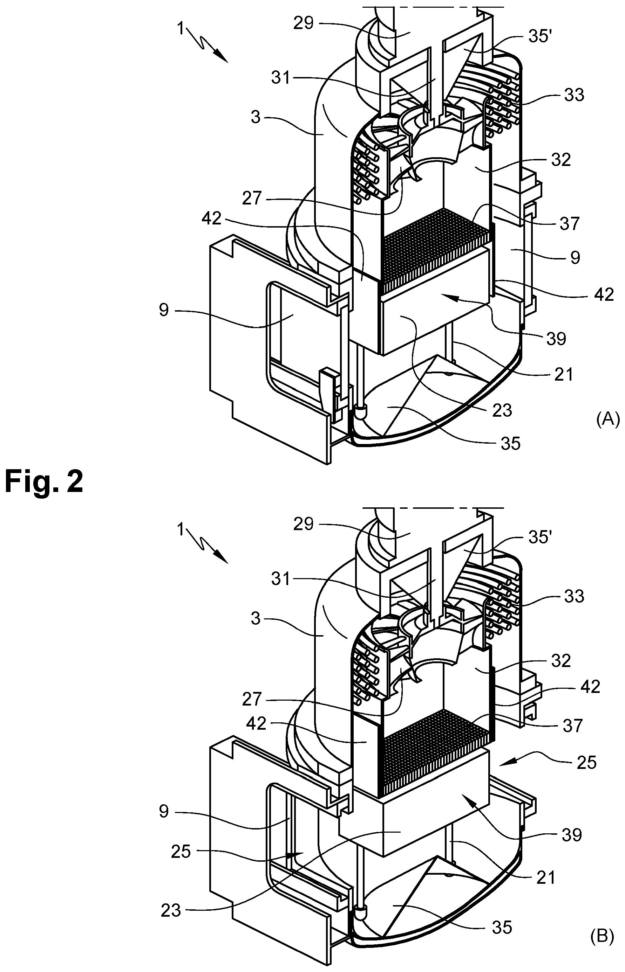

La figure 2 représente, par des vues A et B en coupe, en perspective et partielles, un mode de réalisation d'une cellule de trempe.

La vue A de la figure 2 représente la cellule 1 lors d'un cycle de trempe, les portes 9 de la cellule étant fermées. La vue B de la figure 2 représente la cellule 1 avec les portes 9 ouvertes, par exemple pendant une phase de chargement de pièces à traiter ou de déchargement de pièces traitées.

La cellule 1 comprend, à l'intérieur de l'enceinte 3, au niveau d'un espace de traitement 39, un support 21 destiné à recevoir une charge 23 à traiter. Le support 21 de charge est choisi pour permettre de disposer la charge 23 à l'intérieur de l'enceinte 3, de sorte que la charge soit centrée dans le plan horizontal de l'enceinte 3 et soit dans l'alignement de la ou des ouvertures 25 (figure 2B).

La charge 23 est schématiquement illustrée en figure 2 par un parallélépipède rectangle, représentant le volume occupé par la charge dans l'enceinte. En pratique, la charge comprend plusieurs pièces à traiter, disposées dans un ou plusieurs paniers ajourés et/ou sur un plateau ajouré.

La cellule 1 comprend en outre une turbine à l'aplomb du support 21 de charge. La turbine comprend un ventilateur 27, interne à l'enceinte 3, et un moteur d'entrainement 29, externe à l'enceinte. Un arbre 31 traverse une partie supérieure de l'enceinte 3 et raccorde le moteur 29 au ventilateur 27.

Le ventilateur 27 est disposé à l'intérieur d'un conduit 32 de guidage des gaz vers le support 21 de charge. Le ventilateur 27 est de préférence situé à l'intérieur de l'extrémité supérieure du conduit 32. Le conduit 32 est de préférence de section circulaire en sa partie supérieure, comprenant le ventilateur, et de section carrée ou rectangulaire à son autre extrémité, adaptée à la forme dans laquelle s'inscrit la charge à traiter.

Lors de la trempe d'une charge 23, la circulation du gaz de trempe dans l'enceinte 3 de la cellule 1 s'effectue généralement en circuit fermé. Le ventilateur 27 entraine le gaz dans le conduit 32 vers le bas, autrement dit vers le support 21, donc la charge 23 à traiter. Le gaz de trempe traverse la charge 23 placée dans l'espace de traitement 39 avant de remonter dans l'enceinte par un espace périphérique entre le conduit 32 et les parois de l'enceinte 3.

La circulation des gaz accélérée par le ventilateur permet un refroidissement rapide. Par rapide, on entend une vitesse de refroidissement, pour des pièces métalliques, comprise entre environ 5 degrés par seconde et environ 10 degrés par seconde.

Un échangeur thermique 33 est situé dans cet espace périphérique, de préférence en partie haute au niveau du ventilateur 27. L'échangeur 33 a pour rôle de refroidir le gaz avant que celui-ci soit de nouveau propulsé vers la charge 23 dans la circulation en circuit fermé.

Pour faciliter la circulation du flux de gaz en partie basse de l'enceinte et, plus particulièrement réorienter le gaz de la partie centrale vers la périphérie de l'enceinte, une structure conique 35, dirigée vers le haut est disposée sous le support de charge 21. La pointe du cône 35 est approximativement coaxiale à l'axe du ventilateur 27.

Un structure conique similaire 35', dirigée vers le bas, est prévue en partie supérieure de l'enceinte, afin de ramener le flux de gaz, refroidi par l'échangeur, depuis l'espace de circulation périphérique vers le centre de l'enceinte. La pointe du cône de la structure 35' est approximativement coaxiale à l'axe du ventilateur.

Les structures coniques 35 et 35' facilitent la circulation des gaz au centre de l'enceinte de haut en bas et en périphérie de l'enceinte de bas en haut.

De préférence, une grille 37 servant à homogénéiser le flux des gaz arrivant sur la charge est disposée à l'intérieur du conduit 32, de préférence au niveau de son extrémité inférieure. La fonction de la grille 37 est de rendre l'écoulement de gaz laminaire au niveau de la charge 23.

La qualité du traitement et les performances de l'installation dépendent de l'homogénéité de la circulation des gaz dans l'enceinte 3. Les modes de réalisation décrits tirent leur origine d'une nouvelle analyse des flux de gaz dans une enceinte de traitement. Il ressort de cette analyse que la présence des portes 9, et plus particulièrement des ouvertures 25 et des encadrements de porte correspondants, a tendance à créer des vortex qui interfèrent avec l'écoulement laminaire des gaz dans l'enceinte. Cela perturbe non seulement la remontée périphérique des gaz, mais surtout l'homogénéité du flux de gaz descendant au niveau de la charge et dans la charge de haut en bas au niveau des parties de la charge situées en regard des ouvertures 25. Ce phénomène se trouve accentué en cas d'enceinte cylindrique, ce qui constitue la plupart des cas.

Afin de pallier ce phénomène, on prévoit, dans la cellule 1, un système de parois mobiles 42, interne à l'enceinte et mobile dans la direction axiale de l'enceinte qui est cylindrique, l'ouverture 25 étant sur le pourtour de l'enceinte et non à une extrémité axiale. En d'autres termes, l'ouverture 25 et les parois 42 sont dans des plans parallèles à l'axe de l'enceinte.

Le rôle des parois 42 est de former écran entre les ouvertures 25 et l'espace de traitement 39, plus particulièrement entre les ouvertures 25 et au moins les parties de la charge 23 en regard de ces ouvertures. Afin de ne pas gêner le chargement de la cellule 1 en pièces à traiter et son déchargement en pièces traitées, les parois 42 sont mobiles au moins entre une première position (basse), illustrée en figure 2A, dans laquelle elles forment écran entre la charge 23 et l'ouverture 25 correspondante et une deuxième position (haute), illustrée en figure 2B, dans laquelle elles libèrent l'accès au support 21 de charge, donc à l'espace de traitement 39.

La vue A de la figure 2 illustre une position des parois 42 lors d'un cycle de trempe. Chaque paroi mobile 42 est positionnée dans le prolongement de parois du conduit 32. Dans cette position, les parois mobiles 42 protègent le flux descendant à travers la charge 23 d'éventuelles perturbations du flux remontant dans l'enceinte 3, engendrées par les ouvertures 25. Dans l'exemple représenté, les parois mobiles 42 servent en outre à guider le flux descendant vers la charge, en prolongeant le conduit 32 vers le bas.

La vue B de la figure 2 illustre une position des parois 42 hors cycle de trempe, par exemple, lorsque les portes 9 de la cellule 1 sont ouvertes. Les parois mobiles 42 sont alors positionnées de sorte à libérer l'accès aux ouvertures 25, et inversement, à l'espace de traitement 39 et ainsi à la charge. De préférence, dans cette position, les parois mobiles 42 sont relevées, par exemple de part et d'autre du conduit 32.

Le nombre de parois mobiles 42 peut varier et dépend par exemple de la forme de l'enceinte 3 et des éléments internes à l'enceinte. Dans les modes de réalisation décrits, l'enceinte est de forme générale cylindrique, et la ou les parois sont mobiles dans une direction parallèle à l'axe de l'enceinte. Par exemple, une enceinte n'ayant qu'une ouverture 25 peut être munie d'une seule paroi mobile. Selon un mode de réalisation préféré, quatre parois mobiles sont prévues. Ceci permet d'entourer l'espace de traitement 39, donc la charge 23, et d'améliorer ainsi la fonction de guidage du flux de gaz à travers cette dernière.

Le guidage du flux opéré par les parois 42 permet d'isoler le flux de gaz descendant du flux de gaz remontant après avoir traversé la charge. Ainsi, le flux de gaz descendant (de traitement de la charge) est moins, ou n'est plus, perturbé par d'éventuels effets tourbillonnants du gaz au niveau des encadrements 25 des portes 9. Cela permet d'homogénéiser le flux de traitement et améliore ainsi la qualité des pièces traitées.

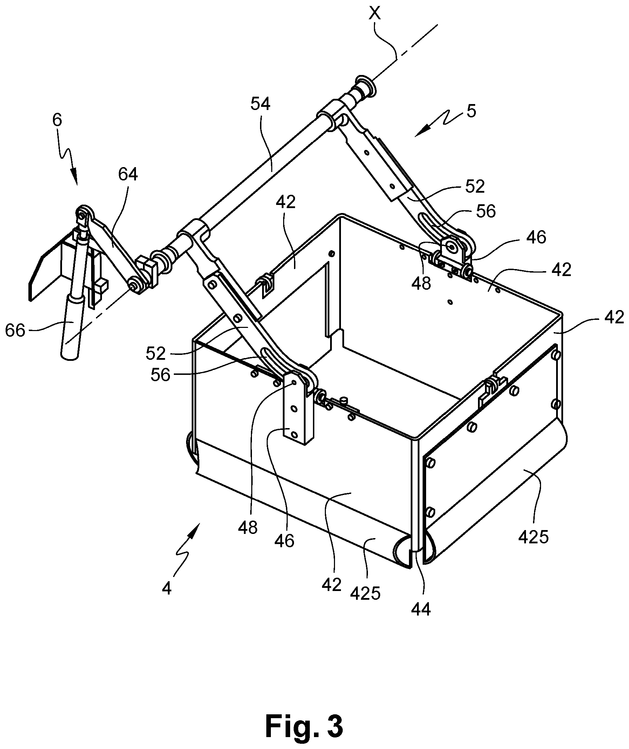

La figure 3 est une vue en perspective d'un mode de réalisation préféré d'un système 4 à parois mobiles 42 pour cellule de trempe.

Selon ce mode de réalisation, le système 4 comporte quatre parois 42 agencées de façon à former un cadre 44, ou manchon ou cheminée, dans cet exemple, parallélépipédique rectangle. Le cadre 44 est mobile, parallèlement à l'axe de l'enceinte cylindrique, entre une position haute (vue B, figure 2) et une position basse (vue A, figure 2). Par exemple, le cadre 44 comporte, en partie supérieure de deux parois 42 opposées, des pattes 46 destinées à être reliées (suspendues) à un mécanisme de commande 5 adapté à mouvoir le cadre 44 entre les deux positions.

Par exemple, le mécanisme 5 comporte un arbre horizontal 54 auquel sont liées des premières extrémités de bras 52 courbes. Des deuxièmes extrémités des bras 52 comportent des lumières ou fentes 56 décrivant, dans un plan vertical, un arc de cercle. Chaque lumière 56 reçoit à coulissement un pion horizontal 48 d'une des pattes verticales 46 de suspension du cadre 44.

La fonction du mécanisme 5 est de transformer un mouvement de rotation de l'arbre 54 autour de son axe X en un mouvement de translation verticale du cadre 44 entre ses positions haute et basse, les pions 48 coulissant dans les lumières 56 pour passer d'une position à une autre avec le pivotement vertical des bras 52 sous l'effet de la rotation de l'arbre 54. L'axe X de l'arbre 54 est donc perpendiculaire à la direction du mouvement des parois 42.

L'arbre 54 est, de préférence disposé de façon décalée latéralement par rapport au cadre 44, de façon à se trouver à l'extérieur du conduit 32 et à ne pas gêner la circulation des gaz.

Un avantage de prévoir une telle conversion de mouvement est que cela facilite la commande en translation verticale du système 4 de parois mobile 42 depuis l'extérieur de l'enceinte en préservant l'étanchéité de la cellule 3. Par exemple, l'arbre 54 traverse l'enceinte 3 horizontalement en étant porté par des liaisons étanches et sa rotation est commandée depuis l'extérieur par un mécanisme 6 à bielle 64 transformant un mouvement de translation, par exemple verticale, d'un vérin 66 en un mouvement de rotation de l'arbre 54.

En position basse, le cadre 44 de parois 42 entoure la charge et la protège ainsi du flux de gaz remontant par la périphérie de l'enceinte. La charge n'est ainsi pas impactée par d'éventuelles perturbations laminaires engendrées par les ouvertures 25 de l'enceinte 3.

Un avantage d'un système encadrant la charge tel qu'illustré en figure 3 est qu'en position basse, les parois 42 prolongent le conduit 32 et favorisent ainsi l'écoulement laminaire des gaz depuis le haut de l'enceinte vers l'espace de traitement 39.

De préférence, les parois 42 comprennent, en partie basse, des déflecteurs 425 de forme arrondie afin d'atténuer les effets des arrêtes basses des parois 42 sur la circulation des gaz, en particulier au niveau de l'inversion de sens de la circulation de vers le bas à vers le haut.

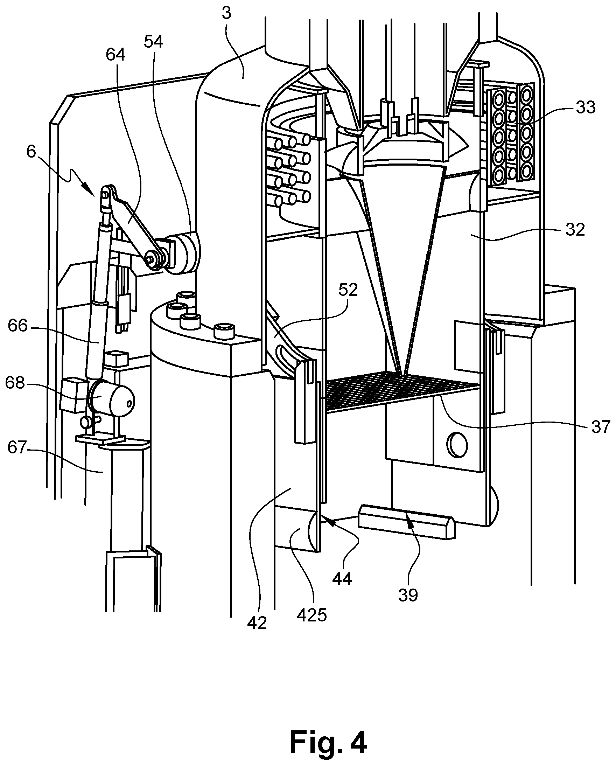

La figure 4 est une vue en perspective et partielle d'une coupe verticale d'un mode de réalisation d'une cellule de trempe 1 équipée d'un système 4 tel que décrit en relation avec la figure 3.

On y retrouve les différents éléments décrits en relation avec les figures 2 et 3. Dans la vue de la figure 4, le cadre 44 est en position basse. La partie basse de la cellule n'est pas représentée en figure 4.

La figure 4 fait ressortir la position décentrée de l'arbre 54 afin de ne pas gêner la circulation des gaz par rapport à un mécanisme qui serait placé sous le ventilateur. Le fait que l'arbre 54 soit placé à l'extérieur de l'aplomb du ventilateur justifie également la forme des bras en raison du mouvement de rotation décentré.

La figure 4 montre également une fixation 67 du mécanisme 6 à l'enceinte et une motorisation 68 du vérin 66.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art. En particulier, l'adaptation du système 4 à parois mobiles 42 et de son mécanisme 5 de déplacement des parois à la forme de l'enceinte 3 et la prise en compte de contraintes liées à cette forme sont à la portée de l'homme du métier à partir de la description ci-dessus.

Enfin, la mise en oeuvre pratique des modes de réalisation et variantes décrits est à la portée de l'homme du métier à partir des indications fonctionnelles données ci-dessus, en particulier, pour ce qui est de leur adaptation à la cellule de trempe concernée et plus généralement à l'installation de traitement.

## Revendications

1. Cellule (1) de trempe sous gaz, comprenant :
une enceinte de forme générale cylindrique (3) ;
au moins une ouverture (25) dans l'enceinte (3), d'accès à un espace de traitement (39) interne à l'enceinte ;
au moins une porte (9) d'obturation de l'ouverture ; la cellule étant **caractérisée par**
un système (4), interne à l'enceinte (3), comportant quatre parois (42) mobiles, dans une direction parallèle à l'axe de l'enceinte cylindrique, entre une première position où une première de ces parois forme écran entre l'ouverture et l'espace de traitement, et une deuxième position où ladite paroi libère l'accès à l'espace de traitement depuis l'ouverture, lesdites parois étant agencées pour former un cadre (44) autour de l'espace de traitement (39) et participant à canaliser le flux de gaz vers l'espace de traitement (39), et ledit cadre étant destiné, lorsqu'il est dans la première position, à entourer une charge (23) disposée dans l'espace de traitement (39).

2. Cellule selon la revendication 1, comportant plusieurs ouvertures (25) d'accès à l'espace de traitement (39), ledit système (4) comportant une des parois mobiles (42) dudit système entre chaque ouverture (25) et l'espace de traitement (39).

3. Cellule selon la revendication 1 ou 2, dans laquelle l'enceinte (3) comporte deux ouvertures (25) d'accès à l'espace de traitement (39).

4. Cellule selon l'une quelconque des revendications 1 à 3, dans laquelle la circulation de gaz dans l'enceinte (3) s'effectue en circuit fermé, dans une première direction en partie centrale de l'enceinte incluant l'espace de traitement (39) et dans une deuxième direction en périphérie de l'enceinte.

5. Cellule selon l'une quelconque des revendications 1 à 4, dans laquelle les parois (42) sont équipées d'éléments déflecteurs (425) au niveau de leurs arrêtes inférieures.

6. Cellule selon l'une quelconque des revendications 1 à 5, dans laquelle les parois (42) sont mobiles en translation verticalement.

7. Cellule selon l'une quelconque des revendications 1 à 6, comportant en outre un mécanisme (5) de commande d'un déplacement du système (4) à parois mobiles d'une position à l'autre.

8. Cellule selon la revendication 7, dans laquelle ledit mécanisme (5) comporte :
un arbre (54) rotatif selon un axe (X) perpendiculaire à la direction du mouvement des parois mobiles ; et
au moins un bras (52) de conversion d'un mouvement rotatif de l'arbre en un mouvement de translation des parois mobiles (42).

9. Cellule selon la revendication 8, dans laquelle la rotation de l'arbre (54) est provoquée depuis l'extérieur de l'enceinte (3) par un mécanisme à bielle (6) convertissant un mouvement de translation d'un vérin (66) en un mouvement de rotation de l'arbre (54).

10. Cellule selon l'une quelconque des revendications 1 à 9, dans laquelle l'espace de traitement (39) comporte un support (21) de charge, destiné à recevoir une charge (23).

11. Cellule selon la revendication 10, comprenant une turbine disposée à l'aplomb du support de charge (21), la turbine comprenant :
un ventilateur (27), interne à l'enceinte (3) ; et
une motorisation (29), externe à l'enceinte.

12. Cellule selon la revendication 11, dans laquelle le ventilateur (27) est à l'intérieur d'un conduit (32) de guidage de gaz vers l'espace de traitement (39).

13. Cellule selon la revendication 12, dans laquelle les parois (42), dans leur première position, prolongent tout ou partie de parois du conduit (32).

## Patentansprüche

1. Gashärtungszelle (1), aufweisend:
eine Kammer (3) mit einer im Wesentlichen zylindrischen Form;
mindesten eine Öffnung (25) in der Kammer (3) für den Zugang zu einem Behandlungsraum (39) innerhalb der Kammer;
mindestens eine Tür (9) zum Verschließen der Öffnung;
wobei die Zelle **gekennzeichnet ist durch**
ein System (4) innerhalb der Kammer (3), das vier Wände (42) aufweist, die in einer Richtung parallel zur Achse der zylindrischen Kammer bewegbar sind zwischen einer ersten Position, in der eine erste der Wände eine Abschirmung zwischen der Öffnung und dem Behandlungsraum bildet, und einer zweiten Position, in der die Wand den Zugang zum Behandlungsraum von der Öffnung freigibt, wobei die Wände so angeordnet sind, dass sie einen Rahmen (44) um den Behandlungsraum (39) bilden und an der Kanalisierung des Gasstroms zum Behandlungsraum (39) beteiligt sind, und wobei der Rahmen in der ersten Position dazu bestimmt ist, eine im Behandlungsraum (39) angeordnete Ladung (23) zu umgeben.

2. Zelle nach Anspruch 1, aufweisend mehrere Öffnungen (25) für den Zugang zum Behandlungsraum (39), wobei das System (4) zwischen jeder Öffnung (25) und dem Behandlungsraum (39) eine der beweglichen Wände (42) des Systems aufweist.

3. Zelle nach Anspruch 1 oder 2, wobei die Kammer (3) zwei Öffnungen (25) für den Zugang zum Behandlungsraum (39) aufweist.

4. Zelle nach einem der Ansprüche 1 bis 3, wobei die Gaszirkulation in der Kammer (3) in einem geschlossenen Kreislauf in einer ersten Richtung in einem zentralen Abschnitt der Kammer, der den Behandlungsraum (39) aufweist, und in einer zweiten Richtung am Umfang der Kammer erfolgt.

5. Zelle nach einem der Ansprüche 1 bis 4, wobei die Wände (42) an ihren unteren Rändern mit Ablenkelementen (425) versehen sind.

6. Zelle nach einem der Ansprüche 1 bis 5, wobei die Wände (42) vertikal verschiebbar sind.

7. Zelle nach einem der Ansprüche 1 bis 6, ferner aufweisend einen Mechanismus (5) zum Steuern einer Bewegung des Systems (4) mit Wänden, die von einer Position in eine andere bewegbar sind.

8. Zelle nach Anspruch 7, wobei der Mechanismus (5) Folgendes aufweist:
eine Welle (54), die sich entlang einer Achse (X) senkrecht zur Bewegungsrichtung der beweglichen Wände dreht; und
mindestens einen Arm (52) zum Umwandeln einer Drehbewegung der Welle in eine Translationsbewegung der beweglichen Wände (42).

9. Zelle nach Anspruch 8, wobei die Drehung der Welle (54) von außerhalb der Kammer (3) durch einen Verbindungsstangenmechanismus (6) bewirkt wird, der eine Translationsbewegung eines Zylinders (66) in eine Drehbewegung der Welle (54) umwandelt.

10. Zelle nach einem der Ansprüche 1 bis 9, wobei der Behandlungsraum (39) einen Ladungsträger (21) aufweist, die dazu bestimmt ist, eine Ladung (23) aufzunehmen.

11. Zelle nach Anspruch 10, aufweisend eine Turbine, die direkt über dem Ladungsträger (21) angeordnet ist, wobei die Turbine Folgendes aufweist:
einen Ventilator (27) innerhalb der Kammer (3); und
einen Motor (29) außerhalb der Kammer.

12. Zelle nach Anspruch 11, wobei der Ventilator (27) in einem Kanal (32) angeordnet ist, der Gas zum Behandlungsraum (39) leitet.

13. Zelle nach Anspruch 12, wobei die Wände (42) in ihrer ersten Position ganz oder teilweise die Wände des Kanals (32) verlängern.

## Claims

1. Gas quenching cell (1), comprising:
a chamber of generally cylindrical shape (3);
at least one opening (25) in the chamber (3), for accessing to a treatment space (39) internal to the chamber;
at least one door (9) for closing the opening;
the cell being **characterised by**
a system (4), internal to the chamber (3), including four walls (42) being moveable, in a direction parallel to the axis of the cylindrical chamber, between a first position where a first one of these walls forms a shield between the opening and the treatment space, and a second position where said wall clears the access to the treatment space from the opening, said walls being arranged to form a frame (44) around the treatment space (39) and taking part in channelling the gas flow towards the treatment space (39), and said frame being intended, when in the first position, to surround a load (23) arranged in the treatment space (39).

2. Cell according to claim 1, including several openings (25) for accessing to the treatment space (39), said system (4) including one of the movable walls (42) of said system between each opening (25) and the treatment space (39).

3. Cell according to claim 1 or 2, wherein the chamber (3) includes two openings (25) for accessing to the treatment space (39).

4. Cell according to any one of claims 1 to 3, wherein the gas circulation in the chamber (3) is performed in closed circuit, in a first direction in a central portion of the chamber including the treatment space (39) and in a second direction at the periphery of the chamber.

5. Cell according to any one of claims 1 to 4, wherein the walls (42) are equipped with deflector elements (425) at their lower edges.

6. Cell according to any one of claims 1 to 5, wherein the walls (42) are movable in vertical translation.

7. Cell according to any one of claims 1 to 6, further including a mechanism (5) for controlling a movement of the system (4) with walls being movable from one position to another.

8. Cell according to claim 7, wherein said mechanism (5) includes:
a shaft (54) rotating along an axis (X) perpendicular to the direction of movement of the movable walls; and
at least one arm (52) for converting a rotary movement of the shaft into a translational movement of the movable walls (42).

9. Cell according to claim 8, wherein the rotation of the shaft (54) is caused from outside the chamber (3) by a connecting rod mechanism (6) converting a translational movement of a cylinder (66) into a rotational movement of the shaft (54).

10. Cell according to any one of claims 1 to 9, wherein the treatment space (39) includes a load support (21), intended to receive a load (23).

11. Cell according to claim 10, comprising a turbine arranged directly above the load support (21), the turbine comprising:
a fan (27), internal to the chamber (3); and
a motor (29), external to the chamber.

12. Cell according to claim 11, wherein the fan (27) is inside a duct (32) guiding gas towards the treatment space (39).

13. Cell according to claim 12, wherein the walls (42), in their first position, extend all or part of the walls of the duct (32).
